# EUROPEAN PATENT SPECIFICATION

(11) **EP 4 728 303 B1**
(45) Date of publication and mention of the grant of the patent: **14.10.2026**
(21) Application number: 24736537.2
(22) Date of filing: 17.06.2024
(51) Int. Cl.: G01S 17/88, G01S 7/481, G01S 17/66, G01S 17/46, G01S 7/499, G01B 11/26

(54) **OPTICAL SYSTEM FOR THE MEASUREMENT OF THE RELATIVE ATTITUDE OF TWO BODIES**
OPTISCHES SYSTEM ZUR MESSUNG DER RELATIVEN LAGE VON ZWEI KÖRPERN
SYSTÈME OPTIQUE POUR LA MESURE DE L'ATTITUDE RELATIVE DE DEUX CORPS

(30) Priority: 15.06.2023 IT 202300012324
(43) Date of publication of application: 22.04.2026
(73) Proprietor: Thales Alenia Space Italia S.p.A. Con Unico Socio, 00131 Roma (IT); Istituto Nazionale di Ricerca Metrologica (I.N.RI.M.), 10135 Torino (IT)
(72) Inventor: BONINO, Luciana, 10146 TORINO (IT); GIRELLA, Jessica, 10146 TORINO (IT); SASSO, Carlo Paolo, 10135 TORINO (IT); PISANI, Marco, 10135 TORINO (IT); ZUCCO, Massimo, 10135 TORINO (IT)
(74) Representative: Studio Torta S.p.A.
(86) International application number: PCT/IB2024/055898
(87) International publication number: WO 2024/257064

(56) References cited:
- CN-B- 109 631 827
- US-A1- 2023 152 452

## Description

### CROSS-REFERENCE TO RELATED APPLICATIONS

This Patent Application claims priority from Italian Patent Application No. 102023000012324 filed on June 15, 2023.

### TECHNICAL FIELD OF THE INVENTION

The present invention relates, in general, to the field of optical metrology and, in particular, to the field of optical metrology, wherein position/attitude of an object is calculated by exploiting its images obtained by means of an optical system.

More specifically, the present invention concerns an innovative optical metrology system particularly suitable for space applications.

### STATE OF THE ART

Nowadays, metrology systems are known that enable determining attitude and/or position of space platforms such as satellites, spacecraft, space stations, etc. In particular, metrology systems are known that, given a pair of space platforms (e.g., a pair of satellites), enable determining the mutual/relative position and the mutual/relative attitude between the two space platforms (e.g., the two satellites).

In this respect, US 2023/152452 A1 discloses a method and a system for simultaneously measuring multiple DOF (degree of freedom) GEs (geometric errors) by a laser. The system comprises a measuring unit and a target mirror unit; the measuring unit comprises a laser emitting module, a polarizing beam splitter, a fixed reflector, a first λ/4 wave plate, a second λ/4 wave plate, a first polarizer, a first photodetector, an interference length measuring module and a two-dimensional (2D) angle measuring module. The target mirror unit comprises a beam splitter and a reflector. The laser emitting module generates an emitting light. The polarizing beam splitter is used for beam splitting, beam combining, and beam separating. The fixed reflector is used for reflecting backward the reference light propagating only inside the measuring unit to return the reference light to the polarizing beam splitter. The solution according to US 2023/152452 A1 can realize a measurement of 5/6 DOF GEs of a space object moving linearly along a linear axis, and a relative drift of position and attitude of two objects with 5/6 DOF in a space can be longtime monitored.

Moreover, CN 109 631 827 B discloses a dual-light-source high-precision anti-interference large-working-distance self-collimating device and a method based on absolute angle measurement. The device comprises a light source unit, a first polarizing film, a feedback imaging unit, a first transmission-type collimating mirror, a combined reflecting mirror, a second polarizing beam splitter, an angular drift amount feedback measuring unit and a wavefront distortion feedback measuring unit. Through increasing the angular drift amount feedback measuring unit and the wavefront distortion feedback measuring unit, an angular drift and wavefront distortion introduced when a self-collimating beam is disturbed by air are measured and compensated in real time, and the influence of air disturbance on the self-collimating beam in a complex air environment and a long working distance is reduced, and measurement and compensation precision is increased. A dual-light-source structure form is used to reduce the interference of the other light source and external environment stray light on sensor detection, improve a signal-to-noise ratio, and increase the anti-interference ability and the stability of a laser autocollimator. In addition, a horizontal reference measurement optical path is added so that the absolute yaw angles and the angles of pitch of the laser autocollimator and a measured surface relative to a horizontal reference can be measured.

### OBJECT AND SUMMARY OF THE INVENTION

The Applicant has noticed that one of the main problems affecting spacecraft is the co-alignment between two devices/objects mounted on board, e.g., a star tracker and a scientific instrument that needs to stay aligned in a certain celestial direction during the mission lifetime. In fact, co-alignment is achieved and tested on ground, but no monitoring can be performed during the mission. The maintenance of co-alignment in different thermal environments is predicted by thermomechanical analysis but cannot be checked in use. Also other effects may hinder instruments alignment, e.g., launch effects, 1g release, moisture release etc. Usually, the required alignment stability is achieved in a passive way through proper spacecraft design and performance estimation is carried out based on mechanical models. Unfortunately, the larger the distance between the two devices/objects/platforms considered, the higher the model uncertainty.

Therefore, object of the present invention is that of providing an optical metrology system such as to overcome the technical drawbacks which currently affect co-alignment of two devices in space applications.

This and other objects are achieved by the present invention in that it relates to an optical metrology system, as defined in the appended claims.

In particular, the optical metrology system according to the present invention comprises an active unit, a first passive unit that includes a first mirror and a first polarizer, and a second passive unit that includes a second mirror and a second polarizer, wherein the first and the second passive units are coupled:
- with a first object/target and a second object/target, respectively; or
- one with a given object/target and the other with a reference frame/system.

The active unit includes:
- a light source designed to emit a light signal that includes a first light component at a first wavelength and a second light component at a second wavelength;
- optical means designed to direct the light signal emitted by the light source toward the first passive unit along a first optical path; and
- a dichroic optical element that is arranged on the first optical path between the optical means and the first passive unit and is designed to cause
   - the first light component to continue propagating along the first optical path up to the first passive unit, whereby said first light component is reflected by the first mirror while the first polarizer applies a linear polarization to said first light component,
   - the second light component to propagate from the dichroic optical element along a second optical path up to the second passive unit, whereby said second light component is reflected by the second mirror while the second polarizer applies a linear polarization to said second light component, and
   - the reflected first and second light components coming from the first and the second passive units to propagate from said dichroic optical element along the first optical path toward the optical means;
- a detector for measuring relative pitch and yaw angles between the first and the second objects/targets, or absolute pitch and yaw angles of the given target with respect to the reference frame/system; and
- a polarimeter-based detector for measuring relative roll angle between the first and the second objects/targets, or absolute roll angle of the given target with respect to the reference frame/system.

The optical means are further designed to direct the reflected first and second light components coming from the dichroic optical element toward the detector and the polarimeter-based detector.

### BRIEF DESCRIPTION OF THE DRAWINGS

For a better understanding of the present invention, preferred embodiments, which are intended purely by way of non-limiting, non-binding examples, will now be described with reference to the attached drawings (all not to scale), wherein:
- Figures 1 and 2 schematically illustrate a first optical metrology system according to a first embodiment of the present invention, capable to measure simultaneously two angular degrees of freedom (pitch, yaw);
- Figure 3 schematically illustrates laser modulation/demodulation strategy used to separate information coming from two lasers, mixed on a CMOS sensor;
- Figure 4 schematically illustrates an optical system that provides roll angle measurement based on the polarimeter concept;
- Figure 5 shows an example of optomechanical design of an active unit capable to measure simultaneously three angular degrees of freedom (pitch, yaw and roll) according to a second embodiment of the present invention;
- Figure 6 shows the optomechanical head receiving light from the two targets; and
- Figure 7 schematically illustrates an optical metrology system for the measurement of pitch, yaw and roll and of lateral and longitudinal displacements of two targets according to a third embodiment of the present invention.

### DESCRIPTION OF EMBODIMENTS OF THE INVENTION

The following description is presented to enable a person skilled in the art to comprehend, make and use the invention.

The present invention concerns an optical metrology system that allows to directly correlate the attitude of two objects (e.g., two space platforms, or two devices installed on one and the same space platform or on two different space platforms, wherein the space platforms may conveniently include satellites, spacecraft, space stations, etc.).

More specifically, the optical metrology system according to the present invention allows to determine, in real time and in a very accurate way, the relative attitude of two objects even when they are very far from each other, provided there is a direct line of sight therebetween. Additionally, with the optical metrology system according to the present invention, standard Attitude and Orbit Control System (AOCS) frequency of 10 Hz can be easily achieved.

More in detail, the optical metrology system according to the present invention allows to measure the absolute attitude of an object/target with respect to a metrology reference system, or the relative attitude of one object/target with respect to another one. In particular, thanks to the present invention, it is possible to accurately and directly measure/determine the attitude of on-board devices whose orientation with respect to a space platform is critical (e.g., reflector antennas, Synthetic Aperture Radar (SAR) antennas, large antennas mounted on booms, booms, optical cameras or scientific instruments that need to aim to a precise direction in space, star trackers, accelerometers, measurement units, gyroscopes, scientific magnetometer payloads that are mounted at the end of long booms, etc.) with respect to a space platform's reference system and without the need to rely only on thermomechanical analyses.

The optical metrology system according to the present invention allows the three angular degrees of freedom (i.e., roll, pitch and yaw angles) to be measured simultaneously with high accuracy. In particular, the optical metrology system according to the present invention exploits the autocollimator concept (i.e., the autocollimator optical configuration) to measure the pitch and the yaw angles, and the polarimeter concept to measure the roll angle.

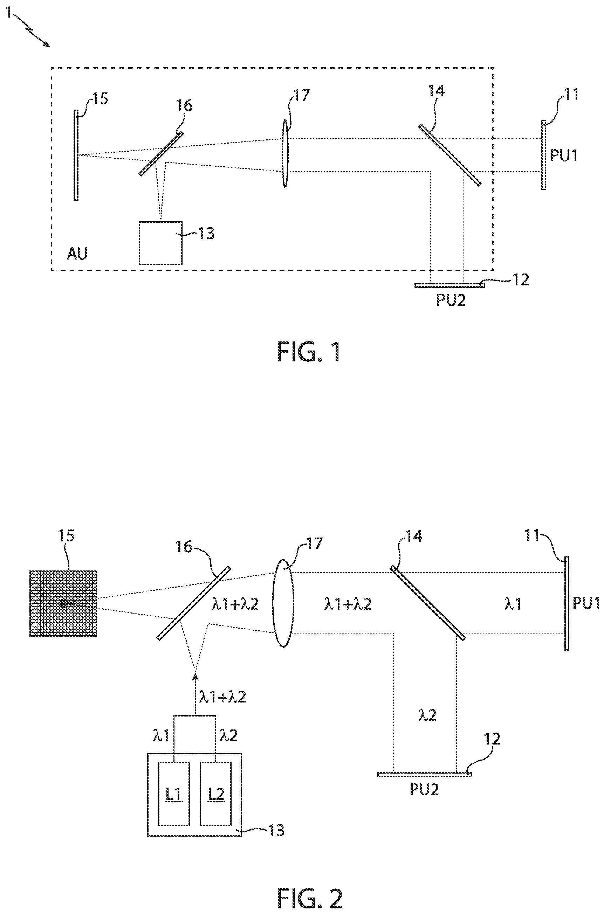

For a better comprehension of the present invention, Figures 1 and 2 schematically illustrate an example of architecture of a first optical metrology system (denoted as a whole by 1) according to a first embodiment of the present invention as for the measurement of pitch and yaw angles.

The first optical metrology system 1 includes an active unit AU, a first passive unit PU1 and a second passive unit PU2, wherein:
- the first passive unit PU1 is coupled with a first object/target and includes a first mirror 11 (preferably, a plane mirror); and
- the second passive unit PU2 is coupled with a second object/target and includes a second mirror 12 (preferably, a plane mirror).

Conveniently, the first and the second objects/targets can be:
- targets mounted on two different space platforms (e.g., two satellites, two spacecraft, two space stations, a satellite and a spacecraft, a space station and a satellite/spacecraft, or the like); or
- two targets mounted on two devices/objects (e.g. star tracker heads and optical camera heads, or the like) installed on two different space platforms (e.g., two satellites, two spacecraft, two space stations, a satellite and a spacecraft, a space station and a satellite/spacecraft, or the like); or
- two targets mounted on two devices/objects (e.g. star tracker heads and optical camera heads, or the like) installed on one and the same space platform (e.g., a satellite, a spacecraft, a space station, or the like).

In this way it is possible to measure/determine the relative attitude of one of the first and the second objects/targets with respect to the other one.

Alternatively, one of the two objects/targets (e.g., the second one) can conveniently be a space platform's reference frame/system (e.g., the main reference cube of a space platform used as reference frame), while the other object/target (e.g., the first one) can conveniently be an instrument on the same space platform. In this way it is possible to measure/determine the absolute attitude of an object/target with respect to the space platform's reference frame/system. Moreover, in this case, it is possible to exploit additional passive units to measure/determine the absolute attitude of multiple objects/targets with respect to the space platform's reference frame/system, using an active unit properly designed to allow the required number of optical paths.

Again with reference to Figures 1 and 2, the active unit AU includes:
- a light source 13 (preferably, a laser source) designed to emit a light signal that includes a first component at a first wavelength and a second component at a second wavelength;
- optical means designed to direct the light signal emitted by the light source 13 toward the first passive unit PU1 along a first optical path; and
- a dichroic optical element 14 (preferably, a dichroic beam splitter - e.g., a dichroic mirror) that is arranged on the first optical path between the optical means and the first passive unit PU1 and is designed to cause
   - the first component to continue propagating along the first optical path up to the first mirror 11 of the first passive unit PU1 thereby being reflected by said first mirror 11,
   - the second component to be reflected from the dichroic optical element 14 along a second optical path up to the second mirror 12 of the second passive unit PU2 thereby being reflected by said second mirror 12, and
   - the reflected first and second components (coming from, respectively, the first passive unit PU1 - namely, the first mirror 11 - along the first optical path and the second passive unit PU2 - namely, the second mirror 12 - along the second optical path) to propagate from said dichroic optical element 14 along the first optical path toward the optical means; and
- a detector 15 (e.g. a Position Sensitive Detector - PSD, a CMOS sensor, etc., depending on the accuracy to be achieved).

The optical means are further designed to direct the reflected first and second components (coming from the dichroic optical element 14) toward the detector 15.

Conveniently, the optical means may include a beam splitter 16 and a lens 17, wherein:
- the light source 13 is arranged at a focus of the lens 17 (in a direction bent by the beam splitter 16) and the detector 15 is arranged on a focal plane of the lens 17;
- the beam splitter 16 is designed to direct the light signal emitted by the light source 13 toward the lens 17 and the reflected first and second components (coming from the dichroic optical element 14 via the lens 17) toward the detector 15; and
- the lens 17 is designed to
   - collimate the light signal emitted by the light source 13 (and coming from the beam splitter 16) along the first optical path, and
   - focus the reflected first and second components (coming from the dichroic optical element 14) on the detector 15 via the beam splitter 16.

As shown in Figure 2, the light source 13 conveniently includes two lasers, namely:
- a first laser L1 designed to emit a laser beam having a first wavelength λ1; and
- a second laser L2 designed to emit a laser beam having a second wavelength λ2.

The laser beams emitted by the two lasers L1, L2 are conveniently combined in a single mode fiber and, then, separated and recombined by the dichroic optical element 14 arranged in front of the lens 17.

The use of one and the same optical head is made possible by the two-wavelength light source 13 (i.e., λ1 emitted by the first L1 and λ2 emitted by the second laser L2), wherein the laser beams are sent in two different directions (i.e., along two different optical paths) by the dichroic optical element 14, whose function is also to direct the two reflected beams so that they impinge on the detector 15 thereby producing two spots thereon. Thanks to the angle-position conversion performed by the lens 17, the position of each spot is related to the corresponding passive unit's attitude.

More specifically, the spot focused on the detector 15 allows to calculate the xy coordinates of the centroid (i.e., the two-dimensional (2D) position thereof). The displacement of the centroid is proportional to the tip-tilt angles of the corresponding passive unit. The measurement angular range can be trimmed by acting on the focal length of the lens 17 and the size of the detector 15.

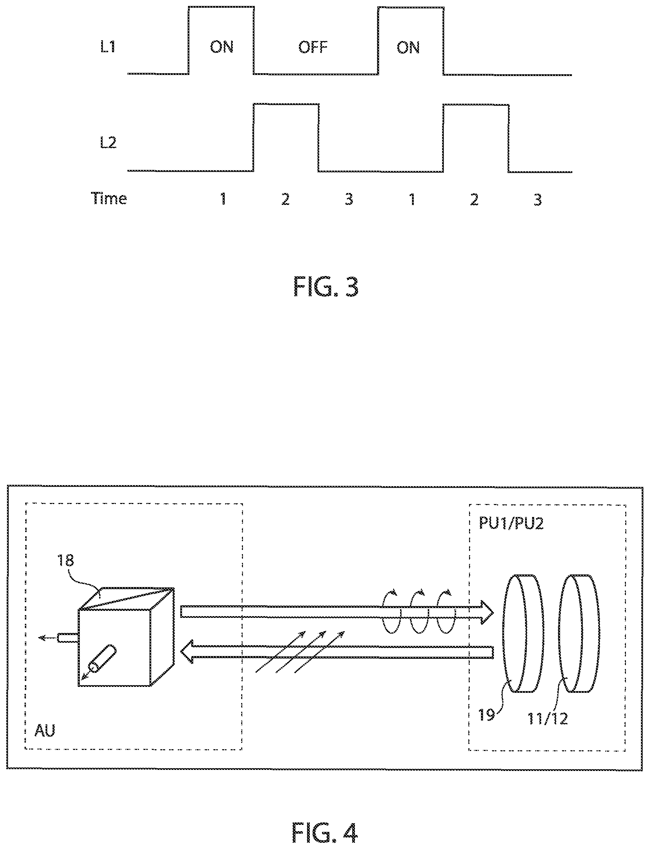

While wavelength/optical path separation is performed by the dichroic optical element 14, the separation of the spots on the detector 15 (necessary to use a centroid algorithm) is performed via a time modulation of the laser emission as shown in Figure 3, wherein:
- during a first time interval, the first laser L1, which is intended to illuminate the first passive unit PU1 in order to measure the 2D position (in terms of pitch and yaw) of the centroid of the first object/target, is on while the second laser L2 is off;
- during a second time interval, the second laser L2, which is intended to illuminate the second passive unit PU2 in order to measure the 2D position (in terms of pitch and yaw) of the centroid of the second object/target, is on while the first laser L1 is off;
- during a third time interval (wherein the first, the second and the third time intervals may have the same duration), both the first and the second lasers L1, L2 are off so as to enable estimation of intensity level(s) of the background, which may, thence, be subtracted from the images of the first and the second objects/targets obtained at the first time interval and at the second time interval, respectively; and,
- then, the aforesaid time pattern of laser emission is repeated over time.

If, as previously explained, additional passive units are used (e.g., in order to measure/determine the absolute attitude of multiple objects/targets with respect to the space platform's reference frame/system), additional laser beam wavelengths are used along with a time-division wavelength-emission logic derived from the aforesaid time pattern of laser emission.

As previously described, the active unit AU includes, for pitch and yaw determination, a double-wavelength laser source, few optical components and a detector (preferably, a CMOS sensor). Additionally, as it will described in the following, the active unit AU includes also a polarimeter for determining the roll angle.

Instead, the passive units include a mirror for pitch and yaw determination and a polarizer for roll determination.

In particular, the present invention exploits the concept of autocollimator for measuring the pitch and the yaw angles in combination with the concept of polarimeter to achieve also the capability to measure the roll angle.

As is known, according to the traditional polarimeter concept, linearly polarized light is generated by passage through a linear polarizer. Light is then sent through an optically active sample, which somewhat rotates the polarization direction. After the passage through said sample, the modified orientation of the polarization is detected by passing the light through another linear polarizer (called "analyzer"), which can be rotated around the beam axis. The rotation of the polarization plane is measured evaluating the intensity change with respect to the parallel position.

The present invention exploits a similar concept. In this respect, reference can be made to Figure 4 that schematically illustrates operation of the first optical metrology system 1 as for roll angle measurement.

In particular, as shown in Figure 4, the active unit AU includes a polarimeter 18, whereas each of the first and the second passive units PU1, PU2 includes, in addition to the first/second mirror 11/12, also a respective polarizer 19.

In use, when illuminated by the laser beam emitted by the first/second laser L1/L2, wherein said laser beam is circularly polarized, the respective polarizer 19 of the first/second passive unit PU1/PU2 produces two linearly polarized components and the polarimeter 18 acts as a rotatable analyzer measuring the two linearly polarized components thus allowing to derive the roll angle. The roll measurement of the two objects/targets is done on the same polarimeter detector by exploiting the time pattern of laser emission previously described.

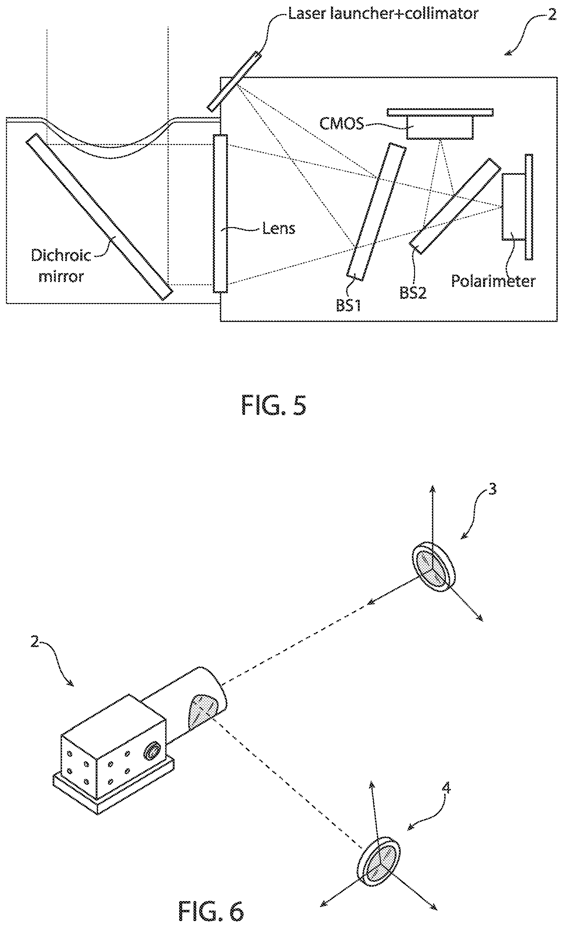

Figure 5 shows an active unit (denoted as a whole by 2) of a second optical metrology system according to the second embodiment of the present invention. In particular, the active unit 2 and its components, as depicted in Figure 5, are immediately and unambiguously clear to those skilled in the art, whereby it is fairly believed that no additional description is necessary. In this connection, it is just worth noting that, differently from the active unit AU of the first optical metrology system 1, the active unit 2 of the second optical metrology system includes two beam splitters BS1, BS2 instead of just one (i.e., the beam splitter 16), while the rest of the architecture of said active unit 2 is substantially the same as that of said active unit AU.

Moreover, Figure 6 shows the second optical metrology system including the active unit 2 and two passive units 3, 4.

With reference to next generation of telecom missions, the present invention could be advantageously exploited to link a reference frame of an antenna (or a boom) with a reference frame of a spacecraft, which is, in turn, linked to the use of star trackers.

Other possible applications are those involving items/objects that have stringent overall alignment requirements and may require alignment stability check during flight, for example:
- large telecoms antennas that need to be accurately pointed toward ground stations to ensure good reception of the beam (due to their small footprint);
- scientific instruments whose attitude must be known with respect to satellite's attitude (identified by spacecraft Master Reference Cube (MRC) used for on ground alignment campaign); an example is constituted by scientific magnetometer payloads that are mounted at the end of long booms (up to a few meters) for immunity from satellite magnetic disturbances, whose alignment must be known at arcsec level;
- spacecraft elements like star tracker, accelerometer measurement unit, gyroscope;
- on-ground applications where the attitude of a device needs to be referenced with high accuracy to the attitude of another device (e.g., large antennas).

The estimated performance of the present invention is:
- attitude accuracy between reference and target ≤ 10" (1 σ) for pitch, roll and yaw at target distances ≤ 8 m;
- theoretical relative alignment error < 1" achievable considering a focal length equal to 0.1 m and a pixel side of 2.2 µm.

However, even better performance can be achieved with proper design and customization.

The present invention can be advantageously exploited also for the measurement of lateral and longitudinal displacements (absolute and relative) of targets.

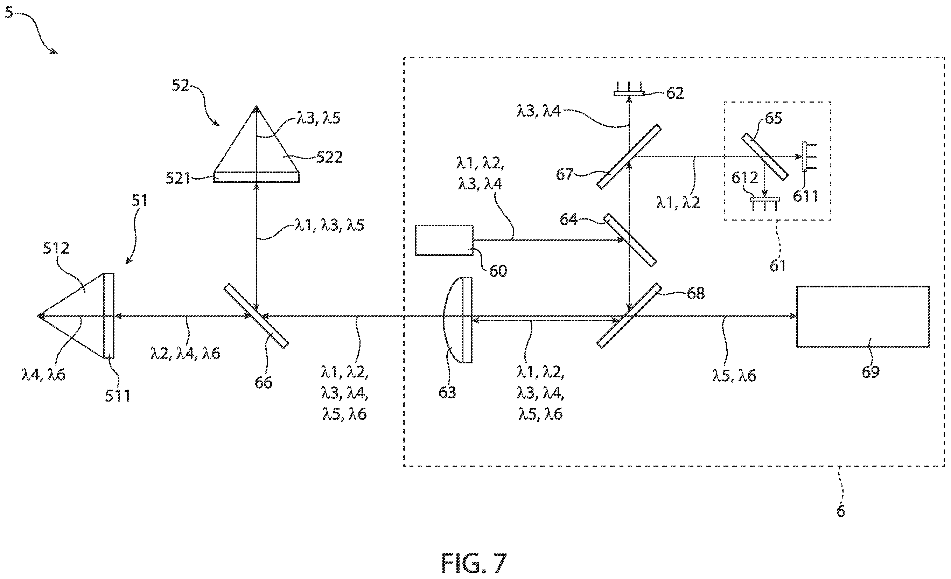

In this respect, Figure 7 schematically illustrates an optical metrology system (denoted as a whole by 5) for the measurement of pitch, yaw and roll and of lateral and longitudinal displacements (absolute and relative) of two targets according to a third embodiment of the present invention.

Said optical metrology system 5 comprises:
- two passive units, namely a first passive unit 51 and a second passive unit 52, each of which is coupled with a respective target (e.g., an on-board object/device or a space platform or a space platform's reference frame/system) and includes, on a respective front part, a respective plane dichroic mirror and a respective polarizer (both denoted as a whole by, respectively, 511 and 521), and a respective corner cube reflector 512, 522 behind said respective plane dichroic mirror and said respective polarizer 511, 521; and
- an active unit (denoted as a whole by 6).

More in detail, said active unit 6 comprises:
- a multi-wavelength laser source 60 designed to emit laser beams with four different wavelength λ1, λ2, λ3, λ4, preferably by implementing a time-division wavelength-emission logic similar to that previously described in relation to Figure 3;
- a pitch, yaw and roll sensor assembly 61 based on two detectors 611 and 612 that form a position sensitive polarimeter;
- a lateral displacement sensor 62;
- a lens 63, wherein the positions sensitive detectors 611, 612 are placed on a focal plane of the lens 63, the multi-wavelength laser source 60 is placed in a focus of the lens 63, while the lateral displacement sensor 62 is placed out of the focal plane of said lens 63;
- a first and a second beam splitters 64, 65 (wherein the second beam splitter 65 can be conveniently arranged/integrated into the pitch, yaw and roll sensor assembly 61, as shown in Figure 7);
- a first, a second and a third dichroic beam splitters 66, 67, 68 (wherein, in Figure 7, the first dichroic beam splitter 66 is shown out of the active unit 6 only for the sake of simplicity of illustration, whereas it can be considered to belong to said active unit 6); and
- longitudinal displacement measuring means 69 that emit/receive wavelengths λ5 and λ6.

Based on said architecture of the optical metrology system 5, it is possible to define:
- a first optical path extending between the lateral displacement sensor 62 and the third dichroic beam splitter 68 via the second dichroic beam splitter 67 and the first beam splitter 64;
- a second optical path extending between the second dichroic beam splitter 67 and the second beam splitter 65;
- a third optical path extending between the longitudinal displacement measuring means 69 and the first passive unit 51 via the third dichroic beam splitter 68, the lens 63 and the first dichroic beam splitter 66; and
- a fourth optical path extending between the first dichroic beam splitter 66 and the second passive unit 52.

During operation of the optical metrology system 5:
- the multi-wavelength laser source 60 emits, toward the first beam splitter 64, a first laser beam having a first wavelength λ1, a second laser beam having a second wavelength λ2, a third laser beam having a third wavelength λ3, and a fourth laser beam having a fourth wavelength λ4, whereby said first, second, third and fourth laser beams reach said first beam splitter 64, which causes said laser beams to propagate toward the third dichroic beam splitter 68 via the first optical path;
- a fifth laser beam having a fifth wavelength λ5 and a sixth laser beam having a sixth wavelength λ6 come from the longitudinal displacement measuring means 69 along the third and fourth optical path respectively, reach the corner cube reflectors 512, 522 respectively and then come back toward the third dichroic beam splitter 68;
- said third dichroic beam splitter 68 causes
   - the first, the second, the third and the fourth laser beams to propagate out of the active optical unit 6 via the lens 63 that collimates said first, second, third and fourth laser beams, and
   - the fifth and the sixth laser beams to continue propagating out of the active optical unit 6 via the lens 63 that collimates said fifth and sixth laser beams;
- the first dichroic beam splitter 66 causes
   - the second, the fourth and the sixth laser beams to continue propagating along the third optical path up to the first passive unit 51, and
   - the first, the third and the fifth laser beams to propagate along the fourth optical path up to the second passive unit 52;
- the plane dichroic mirrors of the first and the second passive units 51, 52 respectively reflect the second laser beam and the first laser beam toward the first dichroic beam splitter 66 along, respectively, the third optical path and the fourth optical path, while the polarizers apply linear polarization to said first and said second laser beams as previously described in relation to Figure 4;
- additionally, the plane dichroic mirrors of the first and the second passive units 51, 52 allow the fourth and the sixth laser beams and the third and the fifth laser beams, respectively, to pass so as to reach the corner cube reflectors 512, 522 behind said plane dichroic mirrors, whereby said corner cube reflectors 512, 522 respectively reflect the fourth and the sixth laser beams and the third and the fifth laser beams toward the first dichroic beam splitter 66 along, respectively, the third optical path and the fourth optical path;
- the first dichroic beam splitter 66 causes all the six reflected laser beams to propagate towards the lens 63 that focuses the first and the second laser beams on the detectors 611, 612 for the measurement of pitch, yaw and roll angles via the third dichroic beam splitter 68, the first beam splitter 64, the second dichroic beam splitter 67 and the second beam splitter 65;
- the reflected third, fourth, fifth and sixth laser beams reach, along the third and fourth optical paths via the lens 63, the third dichroic beam splitter 68 that causes
   - the reflected third and fourth laser beams to propagate up to the lateral displacement sensor 62 along the first optical path via the first beam splitter 64 and the second dichroic beam splitter 67, and
   - the reflected fifth and sixth laser beams to continue propagating along the third optical path up to the longitudinal displacement measuring means 69.

As just described, the first dichroic beam splitter 66 separates the first wavelength λ1 and the second wavelength λ2 directing them respectively toward the second passive unit 52 and the first passive unit 51 that are identical to those previously described in relation to Figures 1-6 except that the respective dichroic mirrors are reflective for the first and the second wavelengths λ1, λ2, and transparent to the third, the fourth, the fifth and the sixth wavelengths λ3, λ4, λ5, λ6. The six reflected laser beams are recombined by the first dichroic beam splitter 66 and pass through the lens 63. Then, the first, the second, the third and the fourth wavelengths λ1, λ2, λ3, λ4 are reflected by the third dichroic beam splitter 68, pass through the first beam splitter 64. Then, the first and the second wavelengths λ1, λ2 are reflected by the second dichroic beam splitter 67 toward the pitch, yaw and roll sensor assembly 61. The polarimeter-based detector 612 is a position sensitive polarimeter that is placed on the focal plane of the lens 63 and that is identical to that previously described in relation to Figure 4.

The third and the fourth wavelengths λ3, λ4 are used for the measurement of the lateral displacement. In particular, the first dichroic beam splitter 66 separates said third and said fourth wavelengths λ3, λ4 directing them respectively toward the second passive unit 52 and the first passive unit 51, wherein the third and the fourth laser beams pass through the dichroic mirrors, impinge on the corner cube reflectors 512, 522 and are reflected back and displaced laterally proportionally to the lateral displacement of the passive units 51, 52. The reflected third and fourth laser beams are recombined by the first dichroic beam splitter 66, pass through the lens 63, are reflected by the third dichroic beam splitter 68, pass through the first beam splitter 64 and the second dichroic beam splitter 67 up to reach the lateral displacement sensor 62 that is placed out of the focal plane of the lens 63 so as to be sensitive to the lateral displacements.

The longitudinal displacement measuring means 69 can be implemented in various ways. In particular, it can be based on two combined distance meters making use of the fifth and the sixth wavelengths λ5, λ6 separated and recombined by the first dichroic beam splitter 66. Alternatively, the longitudinal displacement measuring means 69 can be implemented by means of a Frequency Shift Interferometer (FSI), wherein a single interferometer making use of a frequency modulated laser can measure the relative distance between the two passive units 51, 52. In the first case, the distance metrology can make use of synthetic wavelength interferometry, homodyne or heterodyne interferometry of time of flight metrology (LIDAR). In the second case, only a wavelength is used for the longitudinal metrology and the first dichroic beam splitter 66 acts as a 50% beam splitter for the beam.

In view of the foregoing, it is important to draw attention to some remarks concerning known solutions according to the prior art.

In particular, it is worth noting that US 2023/152452 A1 discloses an optical system capable of measuring a remote target on 6 DOF, comprising a flat mirror and a retroreflector, with respect to a reference, which is assumed to be immobile, and also including a retroreflector. The solution according to US 2023/152452 A1 has several technical differences with respect to the present invention:
- first of all, the use of a double frequency is introduced for completely different purposes: in US 2023/152452 A1 a double frequency is used to implement a heterodyne interferometer; in the present invention, two laser sources with different wavelengths are combined to be able to separate the paths via a dichroic mirror; the separation and recombination of the paths in US 2023/152452 A1, however, is obtained by exploiting the polarization of the source and a polarizing cube beam splitter (PBS), exploiting a classic configuration of polarizations and retarder plates;
- more specifically, in US 2023/152452 A1 the double frequency is introduced (probably upstream of the source with an acoustic-optical device) to create a heterodyne interferometer while in the present invention the use of two frequencies (wavelengths) is the method chosen to separate the paths of the two beams using a dichroic mirror; among other things, the introduction of two frequencies for different reasons also means that, in the present case, it would remain difficult to separate the frequencies by a sufficient amount to use a dichroic mirror without using two different sources; In the case of US 2023/152452 A1, in which a heterodyne interferometer is created, the frequencies can differ by values usually less than one GHz;
- according to the present invention (and differently from the solution according to US 2023/152452 A1), a single lens collimates the beam and focuses it on a detector to measure the rotation of the target on 2 DOF according to the principle of autocollimation, whereby a collimation of the beam is obtained, with a single lens, in addition to the measurement of the angle, which leads to a measurement system capable of tolerating a greater lateral translation of the target (flat mirror), remaining in the measurement conditions.

As far as CN 109 631 827 B is concerned, this Chinese patent relates to a remote angle sensor (autocollimator) made to work at large distances which would solve one of the typical problems of autocollimators, i.e., the disturbance due to air turbulences and the ability to make measurements relating to a horizontal reference, therefore absolute angle measurements.

In CN 109 631 827 B, the absolute angle measurement is made by comparing the reflection of the unknown target with the reflection on a container of liquid that represents a horizon reference. This is done in a not entirely clear way, but certainly by combining and then separating two laser beams by exploiting the difference in wavelength between the two and using dichroic beam splitters (i.e., plates that reflect a wavelength and are transparent to the other one). With reference to Figure 2 of CN 109 631 827 B, the two sources are added using a dichroic (13), then they are separated by a second dichroic (55) which directs them respectively to the unknown mirror (51) and to the reference liquid (56), after which they are recombined by the same dichroic (55) , they return back to the instrument where a third dichroic (14) separates them and sends them to two different detectors.

Although the application is totally different, two concepts are similar between the present invention and the solution according to CN 109 631 827 B: a) the concept of performing a differential angular measurement, i.e., the difference between two targets, one of which is a reference and the other is the object to be measured; b) the fact of exploiting two light sources of different wavelengths which are separated by virtue of the wavelength using a dichroic.

However, the important differences are that: a) the differential angle measurement is made on three degrees of freedom (pitch, roll and yaw), instead of two; b) the combination of the two sources and the separation on the detector is not done with the dichroic, i.e., there is only one dichroic (the 14 in Figures 1 and 2 of present application corresponding to the 55 in Figure 2 of CN 109 631 827 B) instead of three. In fact, the combination occurs by simple superposition of the beams, and the separation occurs using an on-off modulation of the two lasers.

In this connection, it is worth noting that, although the present invention has been described with explicit reference to space applications, it can be advantageously exploited also for other types of applications (e.g., terrestrial/maritime/avionic applications) without requiring any substantial modification.

## Claims

1. An optical metrology system (1) comprising an active unit (AU, 2, 6), a first passive unit (PU1, 3, 51) that includes a first mirror (11) and a first polarizer (19), and a second passive unit (PU2, 4, 52) that includes a second mirror (12) and a second polarizer (19), wherein the first (PU1, 3, 51) and the second passive units (PU2, 4, 52) are coupled:
• with a first object/target and a second object/target, respectively; or
• one with a given object/target and the other with a reference frame/system;
wherein the active unit (AU, 2, 6) includes:
• a light source (13, 60) designed to emit a light signal that includes a first light component at a first wavelength (λ1) and a second light component at a second wavelength (λ2) ;
• optical means designed to direct the light signal emitted by the light source (13, 60) toward the first passive unit (PU1, 3, 51) along a first optical path;
• a dichroic optical element (14, 66) that is arranged on the first optical path between the optical means and the first passive unit (PU1, 3, 51) and is designed to cause
- the first light component to continue propagating along the first optical path up to the first passive unit (PU1, 3, 51), whereby said first light component is reflected by the first mirror (11) while the first polarizer (19) applies a linear polarization to said first light component,
- the second light component to propagate from the dichroic optical element (14, 66) along a second optical path up to the second passive unit (PU2, 4, 52), whereby said second light component is reflected by the second mirror (12) while the second polarizer (19) applies a linear polarization to said second light component, and
- the reflected first and second light components coming from the first (PU1, 3, 51) and the second passive units (PU2, 4, 52) to propagate from said dichroic optical element (14, 66) along the first optical path toward the optical means;
• a detector (15, 611) for measuring relative pitch and yaw angles between the first and the second objects/targets, or absolute pitch and yaw angles of the given target with respect to the reference frame/system; and
• a polarimeter-based detector (18, 612) for measuring relative roll angle between the first and the second objects/targets, or absolute roll angle of the given target with respect to the reference frame/system;
wherein the optical means are further designed to direct the reflected first and second light components coming from the dichroic optical element (14, 66) toward the detector (15, 611) and the polarimeter-based detector (18, 612).

2. The optical metrology system of claim 1, wherein the optical means include one or more beam splitters (16, 64, 65, 67, 68) and a lens (17, 63), and wherein the light source (13, 60) is arranged at a focus of the lens (17, 63) while the detector (15, 611) and the polarimeter-based detector (18, 612) are arranged on a focal plane of the lens (17, 63) ;
wherein said lens (17, 63) is designed to:
• collimate the light signal emitted by the light source (13, 60) toward the first passive unit (PU1, 3, 51) along the first optical path; and
• focus the reflected first and second light components coming from the dichroic optical element (14, 66) on the detector (15, 611) and on the polarimeter-based detector (18, 612) via the beam splitter(s) (16, 64, 65, 67, 68).

3. The optical metrology system according to claim 1 or 2, wherein the light source (13, 60) includes:
• a first laser (L1) designed to emit a first laser beam having the first wavelength (λ1); and
• a second laser (L2) designed to emit a second laser beam having the second wavelength (λ2).

4. The optical metrology system of claim 3, wherein the light source (13, 60) is designed to operate as follows:
a) during a first time interval, the first laser (L1) is on while the second laser (L2) is off;
b) during a second time interval, the second laser (L2) is on while the first laser (L1) is off;
c) during a third time interval, both the first and the second lasers (L1, L2) are off for background estimation and subtraction on the detector (15, 611); and
d) repeating over time the steps a), b) and c).

5. The optical metrology system according to any claim 1-4, further comprising a lateral displacement sensor (62) for measuring relative lateral displacement between the first and the second objects/targets, or absolute lateral displacement of the given target with respect to the reference frame/system;
wherein the light signal emitted by the light source (60) further includes a third light component at a third wavelength and a fourth light component at a fourth wavelength;
wherein the first passive unit (51) includes a first corner cube reflector (512) behind the first mirror and the first polarizer (511), wherein said first mirror is a first dichroic mirror transparent to the third wavelength;
wherein the second passive unit (52) includes a second corner cube reflector (522) behind the second mirror and the second polarizer (521), wherein said second mirror is a second dichroic mirror transparent to the fourth wavelength;
wherein the dichroic optical element (66) is further designed to cause
- the third light component to continue propagating along the first optical path up to the first passive unit (51), whereby said third light component is reflected by the first corner cube reflector (512),
- the fourth light component to propagate from the dichroic optical element (66) along the second optical path up to the second passive unit (52), whereby said fourth light component is reflected by the second corner cube reflector (522), and
- the reflected third and fourth light components coming from the first (51) and the second passive units (52) to propagate from said dichroic optical element (66) along the first optical path toward the optical means;
wherein the optical means are further designed to direct the reflected third and fourth light components coming from the dichroic optical element (66) toward the lateral displacement sensor (62).

6. The optical metrology system of claim 5, wherein the optical means include one or more beam splitters (64, 65, 67, 68) and a lens (63), and wherein the light source (60) is arranged at a focus of the lens (63), the detector (611) and the polarimeter-based detector (612) are arranged on a focal plane of the lens (63), and the lateral displacement sensor (62) is out of the focal plane of the lens (63).

7. The optical metrology system according to claim 5 or 6, wherein the light source (60) includes:
• a first laser designed to emit a first laser beam having the first wavelength;
• a second laser designed to emit a second laser beam having the second wavelength;
• a third laser designed to emit a third laser beam having the third wavelength; and
• a fourth laser designed to emit a fourth laser beam having the fourth wavelength.

8. The optical metrology system according to any claim 5-7, further comprising longitudinal displacement measuring means (69) for measuring relative longitudinal displacement between the first and the second objects/targets, or absolute longitudinal displacement of the given target with respect to the reference frame/system.

9. The optical metrology system according to any preceding claim, wherein the first and the second objects/targets are mounted on:
• two different space platforms; or
• two devices/objects installed on two different space platforms; or
• two devices/objects installed on one and the same space platform.

10. The optical metrology system according to any claim 1-8, wherein the given object/target is an object/device installed on a space platform and the reference frame/system is a reference frame/system of said space platform.

## Patentansprüche

1. Optisches Metrologiesystem (1), umfassend eine aktive Einheit (AU, 2, 6), eine erste passive Einheit (PU1, 3, 51), die einen ersten Spiegel (11) und einen ersten Polarisator (19) beinhaltet, und eine zweite passive Einheit (PU2, 4, 52), die einen zweiten Spiegel (12) und einen zweiten Polarisator (19) beinhaltet, wobei die erste (PU1, 3, 51) und die zweite passive Einheit (PU2, 4, 52) gekoppelt sind:
• mit einem ersten Objekt/Ziel bzw. einem zweiten Objekt/Ziel; oder
• eine mit einem gegebenen Objekt/Ziel und die andere mit einem Referenzrahmen/Referenzsystem;
wobei die aktive Einheit (AU, 2, 6) beinhaltet:
• eine Lichtquelle (13, 60), die ausgelegt ist, ein Lichtsignal zu emittieren, das eine erste Lichtkomponente bei einer ersten Wellenlänge (λ1) und eine zweite Lichtkomponente bei einer zweiten Wellenlänge (λ2) beinhaltet;
• optische Mittel, die ausgelegt sind, das von der Lichtquelle (13, 60) emittierte Lichtsignal entlang eines ersten Strahlengangs auf die erste passive Einheit (PU1, 3, 51) zu richten;
• ein dichroitisches optisches Element (14, 66), das auf dem ersten Strahlengang zwischen den optischen Mitteln und der ersten passiven Einheit (PU1, 3, 51) angeordnet und ausgelegt ist, zu bewirken, dass
- sich die erste Lichtkomponente weiterhin entlang des ersten Strahlengangs bis zu der ersten passiven Einheit (PU1, 3, 51) ausbreitet, wodurch die erste Lichtkomponente von dem ersten Spiegel (11) reflektiert wird, während der erste Polarisator (19) eine lineare Polarisation auf die erste Lichtkomponente anwendet,
- sich die zweite Lichtkomponente von dem dichroitischen optischen Element (14, 66) entlang eines zweiten Strahlengangs bis zu der zweiten passiven Einheit (PU2, 4, 52) ausbreitet, wodurch die zweite Lichtkomponente von dem zweiten Spiegel (12) reflektiert wird, während der zweite Polarisator (19) eine lineare Polarisation auf die zweite Lichtkomponente anwendet, und
- sich die reflektierte erste und zweite Lichtkomponente, die von der ersten (PU1, 3, 51) und der zweiten passiven Einheit (PU2, 4, 52) kommen, von dem dichroitischen optischen Element (14, 66) entlang des ersten Strahlengangs zu den optischen Mitteln ausbreiten;
• einen Detektor (15, 611) zum Messen relativer Nick- und Gierwinkel zwischen dem ersten und dem zweiten Objekt/Ziel oder absoluter Nick- und Gierwinkel des gegebenen Ziels in Bezug auf den Referenzrahmen/das Referenzsystem; und
• einen polarimeterbasierten Detektor (18, 612) zum Messen eines relativen Rollwinkels zwischen dem ersten und dem zweiten Objekt/Ziel oder eines absoluten Rollwinkels des gegebenen Ziels in Bezug auf den Referenzrahmen/das Referenzsystem;
wobei die optischen Mittel ferner ausgelegt sind, die reflektierte erste und zweite Lichtkomponente, die von dem dichroitischen optischen Element (14, 66) kommen, auf den Detektor (15, 611) und den polarimeterbasierten Detektor (18, 612) zu richten.

2. Optisches Metrologiesystem nach Anspruch 1, wobei die optischen Mittel einen oder mehrere Strahlteiler (16, 64, 65, 67, 68) und eine Linse (17, 63) beinhalten, und wobei die Lichtquelle (13, 60) in einem Brennpunkt der Linse (17, 63) angeordnet ist, während der Detektor (15, 611) und der polarimeterbasierte Detektor (18, 612) auf einer Brennebene der Linse (17, 63) angeordnet sind; wobei die Linse (17, 63) ausgelegt ist:
• das von der Lichtquelle (13, 60) emittierte Lichtsignal auf die erste passive Einheit (PU1, 3, 51) entlang des ersten Strahlengangs zu kollimieren; und
• die reflektierte erste und zweite Lichtkomponente, die von dem dichroitischen optischen Element (14, 66) kommen, über den/die Strahlteiler (16, 64, 65, 67, 68) auf den Detektor (15, 611) und auf den polarimeterbasierten Detektor (18, 612) zu fokussieren.

3. Optisches Metrologiesystem nach Anspruch 1 oder 2, wobei die Lichtquelle (13, 60) beinhaltet:
• einen ersten Laser (L1), der ausgelegt ist, einen ersten Laserstrahl mit der ersten Wellenlänge (λ1) zu emittieren; und
• einen zweiten Laser (L2), der ausgelegt ist, einen zweiten Laserstrahl mit der zweiten Wellenlänge (λ2) zu emittieren.

4. Optisches Metrologiesystem nach Anspruch 3, wobei die Lichtquelle (13, 60) ausgelegt ist, wie folgt zu arbeiten:
a) während eines ersten Zeitintervalls ist der erste Laser (L1) eingeschaltet, während der zweite Laser (L2) ausgeschaltet ist;
b) während eines zweiten Zeitintervalls ist der zweite Laser (L2) eingeschaltet, während der erste Laser (L1) ausgeschaltet ist;
c) während eines dritten Zeitintervalls sind sowohl der erste als auch der zweite Laser (L1, L2) zur Hintergrundschätzung und -subtraktion an dem Detektor (15, 611) ausgeschaltet; und
d) zeitliche Wiederholung der Schritte a), b) und c).

5. Optisches Metrologiesystem nach einem der Ansprüche 1-4, ferner umfassend einen Laterale-Verschiebung-Sensor (62) zum Messen einer relativen lateralen Verschiebung zwischen dem ersten und dem zweiten Objekt/Ziel oder einer absoluten lateralen Verschiebung des gegebenen Ziels in Bezug auf den Referenzrahmen/das Referenzsystem;
wobei das von der Lichtquelle (60) emittierte Lichtsignal ferner eine dritte Lichtkomponente bei einer dritten Wellenlänge und eine vierte Lichtkomponente bei einer vierten Wellenlänge beinhaltet;
wobei die erste passive Einheit (51) einen ersten Tripelspiegelreflektor (512) hinter dem ersten Spiegel und dem ersten Polarisator (511) beinhaltet, wobei der erste Spiegel ein erster dichroitischer Spiegel ist, der für die dritte Wellenlänge transparent bzw. durchlässig ist;
wobei die zweite passive Einheit (52) einen zweiten Tripelspiegelreflektor (522) hinter dem zweiten Spiegel und dem zweiten Polarisator (521) beinhaltet, wobei der zweite Spiegel ein zweiter dichroitischer Spiegel ist, der für die vierte Wellenlänge transparent bzw. durchlässig ist;
wobei das dichroitische optische Element (66) ferner ausgelegt ist, zu bewirken,
dass
- sich die dritte Lichtkomponente weiterhin entlang des ersten Strahlengangs bis zu der ersten passiven Einheit (51) ausbreitet, wodurch die dritte Lichtkomponente von dem ersten Tripelspiegelreflektor (512) reflektiert wird,
- sich die vierte Lichtkomponente von dem dichroitischen optischen Element (66) entlang des zweiten Strahlengangs bis zu der zweiten passiven Einheit (52) ausbreitet, wodurch die vierte Lichtkomponente von dem zweiten Tripelspiegelreflektor (522) reflektiert wird, und
- sich die reflektierte dritte und vierte Lichtkomponente, die von der ersten (51) und der zweiten passiven Einheit (52) kommen, von dem dichroitischen optischen Element (66) entlang des ersten Strahlengangs zu den optischen Mitteln ausbreiten;
wobei die optischen Mittel ferner ausgelegt sind, die reflektierte dritte und vierte Lichtkomponente, die von dem dichroitischen optischen Element (66) kommen, auf den Laterale-Verschiebung-Sensor (62) zu richten.

6. Optisches Metrologiesystem nach Anspruch 5, wobei die optischen Mittel einen oder mehrere Strahlteiler (64, 65, 67, 68) und eine Linse (63) beinhalten, und wobei die Lichtquelle (60) in einem Brennpunkt der Linse (63) angeordnet ist, der Detektor (611) und der polarimeterbasierte Detektor (612) auf einer Brennebene der Linse (63) angeordnet sind und der Laterale-Verschiebung-Sensor (62) sich außerhalb der Brennebene der Linse (63) befindet.

7. Optisches Metrologiesystem nach Anspruch 5 oder 6, wobei die Lichtquelle (60) beinhaltet:
• einen ersten Laser, der ausgelegt ist, einen ersten Laserstrahl mit der ersten Wellenlänge zu emittieren;
• einen zweiten Laser, der ausgelegt ist, einen zweiten Laserstrahl mit der zweiten Wellenlänge zu emittieren;
• einen dritten Laser, der ausgelegt ist, einen dritten Laserstrahl mit der dritten Wellenlänge zu emittieren; und
• einen vierten Laser, der ausgelegt ist, einen vierten Laserstrahl mit der vierten Wellenlänge zu emittieren.

8. Optisches Metrologiesystem nach einem der Ansprüche 5-7, ferner umfassend Längsverschiebungsmessmittel (69) zum Messen einer relativen Längsverschiebung zwischen dem ersten und dem zweiten Objekt/Ziel oder einer absoluten Längsverschiebung des gegebenen Ziels in Bezug auf den Referenzrahmen/das Referenzsystem.

9. Optisches Metrologiesystem nach einem der vorhergehenden Ansprüche, wobei das erste und das zweite Objekt/Ziel montiert sind an:
• zwei verschiedenen Raumplattformen; oder
• zwei Vorrichtungen/Objekten, die auf zwei verschiedenen Raumplattformen installiert sind; oder
• zwei Vorrichtungen/Objekten, die auf ein und derselben Raumplattform installiert sind.

10. Optisches Metrologiesystem nach einem der Ansprüche 1-8, wobei das gegebene Objekt/Ziel ein Objekt/eine Vorrichtung ist, das/die auf einer Raumplattform installiert ist, und der Referenzrahmen/das Referenzsystem ein Referenzrahmen/Referenzsystem der Raumplattform ist.

## Revendications

1. Système de métrologie optique (1) comprenant une unité active (AU, 2, 6), une première unité passive (PU1, 3, 51) qui inclut un premier miroir (11) et un premier polariseur (19), et une seconde unité passive (PU2, 4, 52) qui inclut un second miroir (12) et un second polariseur (19), dans lequel les première (PU1, 3, 51) et seconde unités passives (PU2, 4, 52) sont couplées :
• à un premier objet/cible et un second objet/cible, respectivement ; ou
• à un objet/cible donné pour l'une et à un cadre/système de référence pour l'autre ;
dans lequel l'unité active (AU, 2, 6) comporte :
• une source de lumière (13, 60) conçue pour émettre un signal lumineux qui inclut une première composante de lumière à une première longueur d'onde (λ1) et une deuxième composante de lumière à une deuxième longueur d'onde (λ2) ;
• des moyens optiques conçus pour diriger le signal lumineux émis par la source de lumière (13, 60) vers la première unité passive (PU1, 3, 51) le long d'un premier trajet optique ;
• un élément optique dichroïque (14, 66) qui est agencé sur le premier trajet optique entre les moyens optiques et la première unité passive (PU1, 3, 51) et qui est conçu pour amener
- la première composante de lumière à continuer à se propager le long du premier trajet optique jusqu'à la première unité passive (PU1, 3, 51), ladite première composante de lumière étant réfléchie par le premier miroir (11) tandis que le premier polariseur (19) applique une polarisation linéaire à ladite première composante de lumière,
- la deuxième composante de lumière à se propager à partir de l'élément optique dichroïque (14, 66) le long d'un second trajet optique jusqu'à la seconde unité passive (PU2, 4, 52), ladite deuxième composante de lumière étant réfléchie par le second miroir (12) tandis que le second polariseur (19) applique une polarisation linéaire à ladite deuxième composante de lumière, et
- les première et deuxième composantes de lumière réfléchies provenant des première (PU1, 3, 51) et seconde unités passives (PU2, 4, 52) à se propager à partir dudit élément optique dichroïque (14, 66) le long du premier trajet optique vers les moyens optiques ;
• un détecteur (15, 611) pour mesurer des angles de tangage et de lacet relatifs entre le premier et le second objet/cible, ou des angles de tangage et de lacet absolus de la cible donnée par rapport au cadre/système de référence ; et
• un détecteur fondé sur un polarimètre (18, 612) pour mesurer un angle de roulis relatif entre le premier et le second objet/cible, ou un angle de roulis absolu de la cible donnée par rapport au cadre/système de référence ;
dans lequel les moyens optiques sont en outre conçus pour diriger les première et deuxième composantes de lumière réfléchies provenant de l'élément optique dichroïque (14, 66) vers le détecteur (15, 611) et le détecteur fondé sur un polarimètre (18, 612).

2. Système de métrologie optique selon la revendication 1, dans lequel les moyens optiques comportent un ou plusieurs séparateurs de faisceaux (16, 64, 65, 67, 68) et une lentille (17, 63), et dans lequel la source de lumière (13, 60) est agencée au niveau d'un foyer de la lentille (17, 63) tandis que le détecteur (15, 611) et le détecteur fondé sur un polarimètre (18, 612) sont agencés sur un plan focal de la lentille (17, 63) ;
dans lequel ladite lentille (17, 63) est conçue pour :
• collimater le signal lumineux émis par la source de lumière (13, 60) vers la première unité passive (PU1, 3, 51) le long du premier trajet optique ; et
• focaliser les première et deuxième composantes de lumière réfléchies provenant de l'élément optique dichroïque (14, 66) sur le détecteur (15, 611) et sur le détecteur fondé sur un polarimètre (18, 612) via le(s) séparateur (s) de faisceau (16, 64, 65, 67, 68).

3. Système de métrologie optique selon la revendication 1 ou 2, dans lequel la source de lumière (13, 60) comporte :
• un premier laser (L1) conçu pour émettre un premier faisceau laser présentant la première longueur d'onde (1λ) ; et
• un deuxième laser (L2) conçu pour émettre un deuxième faisceau laser présentant la deuxième longueur d'onde (λ2).

4. Système de métrologie optique selon la revendication 3, dans lequel la source de lumière (13, 60) est conçue pour fonctionner comme suit :
a) pendant un premier intervalle de temps, le premier laser (L1) est activé tandis que le deuxième laser (L2) est désactivé ;
b) pendant un deuxième intervalle de temps, le deuxième laser (L2) est activé tandis que le premier laser (L1) est désactivé ;
c) pendant un troisième intervalle de temps, les premier et deuxième lasers (L1, L2) sont désactivés pour l'estimation et la soustraction du fond au niveau du détecteur (15, 611) ; et
d) la répétition au cours du temps des étapes a), b) et c).

5. Système de métrologie optique selon l'une quelconque des revendications 1 à 4, comprenant en outre un capteur de déplacement latéral (62) pour mesurer un déplacement latéral relatif entre les premier et second objets/cibles, ou un déplacement latéral absolu de la cible donnée par rapport au cadre/système de référence ;
dans lequel le signal lumineux émis par la source de lumière (60) comporte en outre une troisième composante de lumière à une troisième longueur d'onde et une quatrième composante de lumière à une quatrième longueur d'onde ;
dans lequel la première unité passive (51) comporte un premier réflecteur prismatique (512) derrière le premier miroir et le premier polariseur (511), dans lequel ledit premier miroir est un premier miroir dichroïque transparent à la troisième longueur d'onde ;
dans lequel la seconde unité passive (52) comporte un second réflecteur prismatique (522) derrière le second miroir et le second polariseur (521), dans lequel ledit second miroir est un second miroir dichroïque transparent à la quatrième longueur d'onde ;
dans lequel l'élément optique dichroïque (66) est en outre conçu pour amener
- la troisième composante de lumière à continuer à se propager le long du premier trajet optique jusqu'à la première unité passive (51), ladite troisième composante de lumière étant réfléchie par le premier réflecteur prismatique (512),
- la quatrième composante de lumière à se propager à partir de l'élément optique dichroïque (66) le long du second trajet optique jusqu'à la seconde unité passive (52), ladite quatrième composante de lumière étant réfléchie par le second réflecteur prismatique (522), et
- les troisième et quatrième composantes de lumière réfléchies provenant des première (51) et seconde unités passives (52) à se propager à partir dudit élément optique dichroïque (66) le long du premier trajet optique vers les moyens optiques ;
dans lequel les moyens optiques sont en outre conçus pour diriger les troisième et quatrième composantes de lumière réfléchies provenant de l'élément optique dichroïque (66) vers le capteur de déplacement latéral (62) .

6. Système de métrologie optique selon la revendication 5, dans lequel les moyens optiques comportent un ou plusieurs séparateurs de faisceaux (64, 65, 67, 68) et une lentille (63), et dans lequel la source de lumière (60) est agencée au niveau d'un foyer de la lentille (63), le détecteur (611) et le détecteur fondé sur un polarimètre (612) sont agencés sur un plan focal de la lentille (63), et le capteur de déplacement latéral (62) est en dehors du plan focal de la lentille (63) .

7. Système de métrologie optique selon la revendication 5 ou 6, dans lequel la source de lumière (60) comporte :
• un premier laser conçu pour émettre un premier faisceau laser présentant la première longueur d'onde ;
• un deuxième laser conçu pour émettre un deuxième faisceau laser présentant la deuxième longueur d'onde ;
• un troisième laser conçu pour émettre un troisième faisceau laser présentant la troisième longueur d'onde ; et
• un quatrième laser conçu pour émettre un quatrième faisceau laser présentant la quatrième longueur d'onde.

8. Système de métrologie optique selon l'une quelconque des revendications 5 à 7, comprenant en outre des moyens de mesure de déplacement longitudinal (69) pour mesurer un déplacement longitudinal relatif entre le premier et le second objet/cible, ou un déplacement longitudinal absolu de la cible donnée par rapport au cadre/système de référence.

9. Système de métrologie optique selon une quelconque revendication précédente, dans lequel les premier et second objets/cibles sont montés sur :
• deux plateformes spatiales différentes ; ou
• deux dispositifs/objets installés sur deux plateformes spatiales différentes ; ou
• deux dispositifs/objets installés sur une seule et même plateforme spatiale.

10. Système de métrologie optique selon l'une quelconque des revendications 1 à 8, dans lequel l'objet/la cible donné(e) est un objet/dispositif installé sur une plateforme spatiale et le cadre/système de référence est un cadre/système de référence de ladite plateforme spatiale.
